# EUROPEAN PATENT APPLICATION

(11) **EP 4 738 088 A1**
(43) Date of publication of application: **06.05.2026**
(21) Application number: 25179769.2
(22) Date of filing: 30.05.2025
(51) Int. Cl.: G06F 3/0486, G06F 3/0488

(54) **METHOD FOR SCREEN PROJECTION, APPARATUS, ELECTRONIC DEVICE AND STORAGE MEDIUM**

(30) Priority: 29.10.2024 CN 202411525715
(71) Applicant: Beijing Xiaomi Mobile Software Co., Ltd., Beijing 100085 (CN)
(72) Inventor: SHI, Cheng, Beijing, 100085 (CN)
(74) Representative: Dehns Germany Partnerschaft mbB

(57) **Abstract**

A method for screen projection, includes: determining (101) a position to which a first mirroring window displayed in an initial mirroring area of a screen projection receiving device is to be moved; determining (102) a target mirroring area corresponding to the first mirroring window and a display form in the target mirroring area according to the position to be moved to; and displaying (103) a second mirroring window corresponding to the first mirroring window in the target mirroring area according to the display form.

## Description

### TECHNICAL FIELD

The present invention relates to the field of computer technology, and in particular to a method for screen projection, an apparatus, an electronic device and a storage medium.

### BACKGROUND

At present, with the development of intelligence and the accumulation of Internet of Things technology by various manufacturers, more and more devices are involved in display, the devices including TVs, computers, and pads, so that the display content of the mobile terminal may be screen-projected onto different display devices, improving the viewing effect and greatly facilitating people's life, work, and entertainment.

### SUMMARY

The present invention aims to solve one of the technical problems in the related art at least to some extent.

In view of this, the present invention provides a method, an apparatus, an electronic device and a storage medium, in which, by moving the mirroring window on the screen projection receiving device, the change of the mirroring area and the display form of the mirroring window is realized, the separate screen projection display of the mirroring window is realized, and the operational convenience in the screen projection scene is improved.

According to an aspect of embodiments of the present invention, there is provided a method for screen projection, including:
determining a position to which a first mirroring window displayed in an initial mirroring area of a screen projection receiving device is to be moved;
determining a target mirroring area corresponding to the first mirroring window and a display form in the target mirroring area according to the position to be moved to; and
displaying a second mirroring window corresponding to the first mirroring window in the target mirroring area according to the display form.

According to an aspect of embodiments of the present invention, there is provided another method for screen projection, including:
obtaining size information of a second mirroring window to be displayed corresponding to a first mirroring window, where the size information is determined according to a display form;
controlling a screen projection receiving device to display the second mirroring window corresponding to the first mirroring window in a target mirroring area according to the size information, where the target mirroring area and the display form in the target mirroring area are determined according to a determined position to which the first mirroring window displayed in an initial mirroring area of the screen projection receiving device is to be moved.

According to another aspect of embodiments of the present invention, there is provided an apparatus for screen projection, including:
a first determination module, configured to determine a position to which a first mirroring window displayed in an initial mirroring area of a screen projection receiving device is to be moved;
a second determination module, configured to determine a target mirroring area corresponding to the first mirroring window and a display form in the target mirroring area according to the position to be moved to; and
a display module, configured to display a second mirroring window corresponding to the first mirroring window in the target mirroring area according to the display form.

According to another aspect of embodiments of the present invention, there is provided another apparatus for screen projection, including:
an obtaining module, configured to obtain size information of a second mirroring window to be displayed corresponding to a first mirroring window, where the size information is determined according to a display form; and
a control module, configured to control a screen projection receiving device to display the second mirroring window corresponding to the first mirroring window in a target mirroring area according to the size information, where the target mirroring area and the display form in the target mirroring area are determined based on a determined position to which the first mirroring window displayed in an initial mirroring area of the screen projection receiving device is to be moved.

According to another aspect of embodiments of the present invention, there is provided an electronic device, including a memory, a processor, and a computer program stored in the memory and executable on the processor. When the processor executes the program, the method according to one of the foregoing aspects is implemented.

According to another aspect of embodiments of the present invention, there is provided a non-transitory computer-readable storage medium, and a computer program is stored on the non-transitory computer-readable storage medium. When the computer program is executed by a processor, the method according to one of the foregoing aspects is implemented.

According to another aspect of embodiments of the present invention, there is provided a computer program product on which a computer program is stored. When the program is executed by a processor, the method described in the above aspect is implemented.

According to the method for data processing and screen projection, the apparatus, the electronic device and the storage medium provided in the present invention, the position to which the first mirroring window displayed in the initial mirroring area of the screen projection receiving device is to be moved is determined, the target mirroring area corresponding to the first mirroring window and the display form in the target mirroring area are determined according to the position to be moved to, and the second mirroring window corresponding to the first mirroring window is displayed in the target mirroring area according to the display form. By determining, on the screen projection receiving device, the position to which the screen-projected first mirroring window is to be moved, determining the target mirroring area and the display form for performing separate screen projection on the first mirroring window based on the position to be moved to, and displaying the second mirroring window corresponding to the first mirroring window in the target mirroring area according to the display form, it is realized that screen projection display is performed again on the screen-projected first mirroring window on the screen projection receiving device, thus improving the operational convenience in the screen projection scene.

Additional aspects and advantages of the present invention will be partially given in the description below, and will partially become apparent from the description below, or will be learned through the practice of the present invention.

### BRIEF DESCRIPTION OF THE DRAWINGS

The above and/or additional aspects and advantages of the present invention will become apparent and easily understood from the following description of the embodiments in conjunction with the accompanying drawings.
FIG. 1 is a first flow chart of a method for screen projection provided according to some embodiments of the present invention;
FIG. 2 is a second flow chart of another method for screen projection provided according to some embodiments of the present invention;
FIG. 3 is a first schematic diagram of screen projection by dragging provided according to some embodiments of the present invention;
FIG. 4 is a second schematic diagram of screen projection by dragging provided according to some embodiments of the present invention;
FIG. 5 is a third schematic diagram of screen projection by dragging provided according to some embodiments of the present invention;
FIG. 6 is a fourth schematic diagram of screen projection by dragging provided according to some embodiments of the present invention;
FIG. 7 is a third flow chart of another method for screen projection provided according to some embodiments of the present invention;
FIG. 8 is a schematic diagram of a flow chart of a method for screen projection and interaction provided according to some embodiments of the present invention;
FIG. 9 is a first structural diagram of an apparatus for screen projection provided according to some embodiments of the present invention;
FIG. 10 is a second structural schematic diagram of an apparatus for screen projection provided according to some embodiments of the present invention;
FIG. 11 is a schematic structural diagram of an electronic device provided according to some embodiments of the present invention.

### DETAILED DESCRIPTION

The embodiments of the present invention are described in detail below, and examples of the embodiments are shown in the accompanying drawings, where the same or similar reference numerals throughout represent the same or similar elements or elements having the same or similar functions. The embodiments described below with reference to the accompanying drawings are exemplary, and are intended to be used to explain the present invention, which should not be construed as limitations of the present invention.

In the screen projection scene, if the mirroring window displayed on the screen projection receiving device is screen-projected again in the screen projection receiving device, there is an inconvenience in the operation.

The method for screen projection, the apparatus, the electronic device and the storage medium according to the embodiments of the present invention are described below with reference to the accompanying drawings.

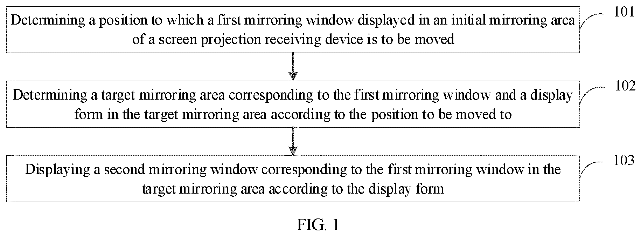

FIG1 is a first flow chart of a method for screen projection provided according to some embodiments of the present invention.

In the embodiments of the present invention, it is described by taking the method for screen projection being configured in an apparatus for screen projection as an example. The apparatus for screen projection may be applied to any electronic device, so that the electronic device may perform the screen projection function.

In some embodiments, the electronic device may be any device with computing capabilities, such as a mobile terminal. The mobile terminal may be a hardware device with various operating systems, touch screens and/or display screens, such as a mobile phone, a tablet computer, a personal digital assistant, a wearable device, etc.

As shown in FIG. 1, the method may include the following steps.

In step 101, a position, to which a first mirroring window displayed in an initial mirroring area of a screen projection receiving device is to be moved, is determined.

In some embodiments, the screen projection receiving device is a hardware device with an operating system, a touch screen and/or a display screen, such as a tablet computer. The first mirroring window refers to that, in the screen projection scene, the content in the window of the application displayed in the display screen of the screen projection device is rendered by the screen projection device to a virtual screen, and then the window of the application displayed in the virtual screen is copied and then displayed in the manner of mirroring in an initial mirroring area of the screen projection receiving device, where the initial mirroring area is an area that is set for displaying the mirroring window in the screen projection scene. In some embodiments, the first mirroring window may be obtained by screen projection in the case that the window of the application corresponding to the first mirroring window is opened by the screen projection device in the manner of full screen, or in the manner of small window, or in the manner of split screen.

In some embodiments of the present invention, the first mirroring window is displayed in an initial mirroring area of the screen projection receiving device, and, in response to detecting a dragging operation performed by a user on the first mirroring window, the movement of the drag action is monitored, until it is monitored that the user releases the hand. In other words, in the case that the drag action is completed, the position to which the first mirroring window is to be moved is determined based on the position to which the dragging operation moves when the drag action is completed.

In a second implementation of the embodiments of the present invention, the first mirroring window is displayed in an initial mirroring area in the display screen of the screen projection receiving device; and, in response to detecting a user's voice command, the position to which the first mirroring window is to be moved in the display screen of the screen projection receiving device is determined according to the movement information of the first mirroring window carried in the voice command.

In step 102, a target mirroring area corresponding to the first mirroring window and a display form in the target mirroring area are determined according to the position to be moved to.

In some embodiments of the present invention, the position to be moved to is compared with the initial mirroring area where the first mirroring window is located before the drag action is performed, to identify the position information between the position to be moved to and the initial mirroring area, thus determining the target mirroring area corresponding to the first mirroring window in the position to be moved to and the display form of the first mirroring window in the display area, where the display form includes full-screen display, split screen display and small-window display. In some embodiments, for small-window display, the size of the small window may be set according to requirements. For split screen display, for example, for2 split screen display in the screen projection receiving device, it refers to that the window size for the split screen display is half of the display screen.

In step 103, a second mirroring window corresponding to the first mirroring window is displayed in the target mirroring area according to the display form.

In some embodiments of the present invention, according to the display form, the second mirroring window to be displayed corresponding to the first mirroring window is determined, and the second mirroring window is displayed in the target mirroring area according to the display form. It is realized that, the first mirroring window is moved in the screen projection receiving device, so as to determine the display form and the target mirroring area corresponding to the first mirroring window. It is realized that screen projection is performed again on the second mirroring window corresponding to the first mirroring window in the target mirroring area of the screen projection receiving device, so as to display the second mirroring window. Repeat screen projection is realized by moving the first mirroring window in screen projection display on the screen projection receiving device, which increases the convenience.

In the method for screen projection according to the embodiments of the present invention, the position to which the first mirroring window displayed in the initial mirroring area of the screen projection receiving device is to be moved is determined, the target mirroring area corresponding to the first mirroring window and the display form in the target mirroring area are determined according to the position to be moved to, and the second mirroring window corresponding to the first mirroring window is displayed in the target mirroring area according to the display form. By determining, on the screen projection receiving device, the position to which the screen-projected first mirroring window is to be moved, determining the target mirroring area and the display form for performing separate screen projection on the first mirroring window based on the position to be moved to, and displaying the second mirroring window corresponding to the first mirroring window in the target mirroring area according to the display form, it is realized that screen projection display is performed again on the screen-projected first mirroring window on the screen projection receiving device, thus improving the operational convenience in the screen projection scene.

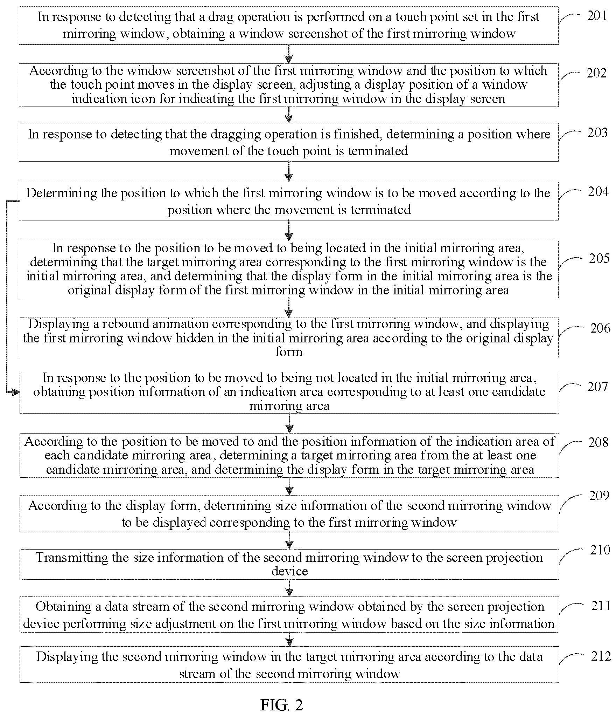

Based on the above embodiment, FIG. 2 is a second flow chart of another method for screen projection provided according to some embodiments of the present invention. As shown in FIG. 2, the method includes the following steps.

In step 201, in response to detecting that a dragging operation is performed on a touch point set in the first mirroring window, a window screenshot of the first mirroring window is obtained.

In the embodiments of the present invention, in response to detecting that a dragging operation is performed on the touch point set in the first mirroring window, the window screenshot of the first mirroring window is obtained. Different implementations are described below.

As an implementation, when the screen projection receiving device detects that a dragging operation is performed on the first mirroring window, by using a plugin with a screenshot function or a screenshot of the display screen by the application, a window screenshot is obtained by taking a screenshot of the first mirroring window through user interaction selection.

As another implementation, in response to detecting that a dragging operation is performed on a touch point set in the first mirroring window, a target touch screen event for the first mirroring window is generated. The target touch screen event is used to indicate that a dragging operation is performed on the first mirroring window. Since the user may perform a long press first when performing a dragging operation on the touch point set in the first mirroring window on the touch display screen of the screen projection receiving device, when a long press is detected, a target touch screen event is generated. The target touch screen event is transmitted to the screen projection device, where the target touch screen event is used for the screen projection device to take a screenshot of the first mirroring window displayed on the screen projection device side according to the target touch screen event to obtain a window screenshot. Then, the window screenshot of the first mirroring window transmitted by the screen projection device is obtained.

In step 202, according to the window screenshot of the first mirroring window and the position to which the touch point moves in the display screen, a display position of a window indication icon for indicating the first mirroring window in the display screen is adjusted.

In the embodiments of the present invention, during the dragging process by the user, in order to display the effect of the first mirroring window being dragged, it is necessary to display a window indication icon for indicating the first mirroring window and adjust the position following the dragging during the process that the user performs dragging on the first mirroring window, so as to simulate the real dragging process. For different positions being dragged to, it is described below, respectively.

In a scene, the position to which the touch point moves in the display screen is compared with the position of the initial mirroring area, where the initial mirroring area is the area where the first mirroring window is located before the dragging operation is performed. In response to the position to which the touch point moves in the display screen being located in the initial mirroring area, that is, most of the first mirroring window is still in the initial mirroring area, the window screenshot is used as the window indication icon of the first mirroring window, and the display position of the window screenshot in the display screen is adjusted, so that when the touch point has not moved out of the initial mirroring area, the window screenshot is used to replace the first mirroring window for movement, thus producing a real dragging effect.

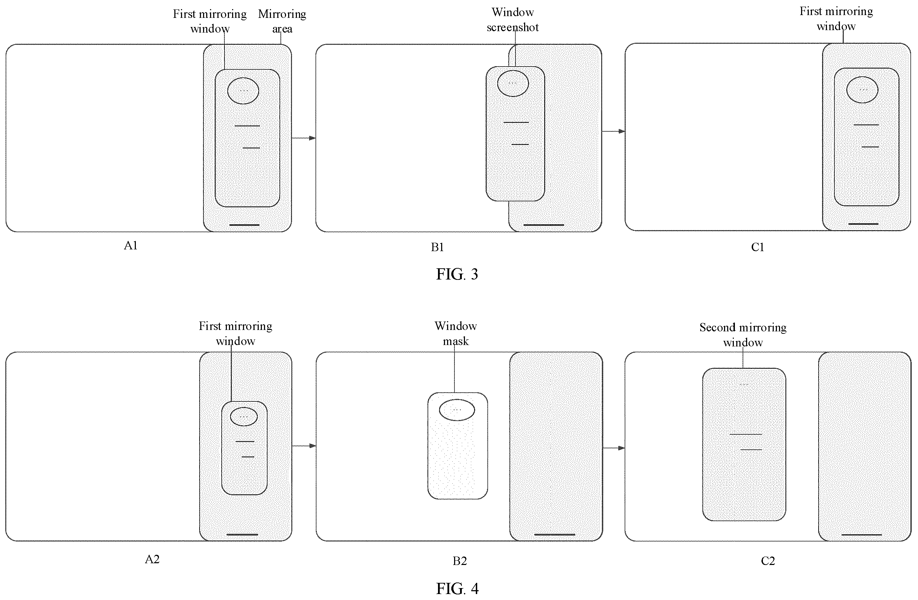

As an example, FIG. 3 is a first schematic diagram of screen projection by dragging provided according to some embodiments of the present invention. As shown in FIG. 3, on the mobile phone, the application opened in a small window is screen-projected to the tablet computer for display through mirroring. That is, A1 in FIG. 3 shows the display situation of the screen-projected first mirroring window on the display screen of the tablet computer. When the user drags the touch point in the first mirroring window, and the touch point does not leave the initial mirroring area, the window screenshot corresponding to the first mirroring window is moved following the user's dragging operation, as shown in B1. By continuously updating the position of the window screenshot, the dragging effect of the first mirroring window is achieved. This is because the first mirroring window is a mirroring window that is screen-projected, and is not a window of a real application opened in the tablet computer. Therefore, the dragging of the first mirroring window cannot be really achieved. The window screenshot of the first mirroring window is moved to achieve the effect of simulating real dragging.

For the manner that the application displayed in full screen or in 2 split screen in the display screen of the mobile phone is screen-projected to the tablet computer for display through mirroring on the mobile phone, the principle is the same as the principle in the manner of display in a small window, which will not be repeated in the embodiments of the present invention.

In another scene, the position to which the touch point moves in the display screen is compared with the position of the initial mirroring area. In response to the position to which the touch point moves in the display screen being not located in the initial mirroring area, a window mask of the window screenshot is generated, the window mask is used as the window indication icon for indicating the first mirroring window, and the display position of the window indication icon in the display screen is adjusted. This is because, when the position to which the touch point moves in the display screen is not located in the initial mirroring area, it means that the user wants to perform screen projection again on the first mirroring window, that is, to display it outside the initial mirroring area of the screen projection receiving device. In order to prompt the user of the display scale when it is displayed in different areas outside the initial mirroring area, stretching may be performed on the window screenshot in the length direction and the width direction to change the display scale of the window screenshot. The change in the display scale will cause the content of the window screenshot to be deformed, resulting in poor visual effects. Therefore, it may be displayed in the form of a window mask, which avoids the deformation of the content caused by the change in the display scale, improves the visual effect, and increases the sense of reality.

As an example, FIG. 4 is a second schematic diagram of screen projection by dragging provided according to some embodiments of the present invention. As shown in FIG. 4, on the mobile phone, the application opened in a small window is screen-projected to the tablet computer for display through mirroring. That is, A2 in FIG. 4 shows the situation of the screen-projected first mirroring window displayed in a small window on the display screen of the tablet computer. When the user drags the touch point in the first mirroring window, and the touch point leaves the initial mirroring area, the window mask corresponding to the window screenshot corresponding to the first mirroring window is moved following the user's dragging operation, as shown in B2. By continuously updating the position of the window mask, the dragging effect of the first mirroring window is achieved. This is because the first mirroring window is a mirroring window that is screen-projected, and is not a window of a real application opened in the tablet computer. Therefore, the dragging of the first mirroring window cannot be really achieved. The window mask of the first mirroring window is moved to achieve the effect of simulating real dragging.

As an implementation, in the process of dragging the first mirroring window, in order to ensure the authenticity and smoothness of the dragging effect, when it is detected that the dragging action is performed, the first mirroring window in the initial mirroring area is hidden. By hiding the first mirroring window, the conjunction of the dragging action and the window movement is realized, so that the dragging operation perceived by the user is smoother, thus improving the user's experience.

In step 203, in response to detecting that the dragging operation is finished, a position where movement of the touch point is terminated is determined.

In the embodiments of the present invention, in response to detecting that the dragging operation is finished, that is, the press of the dragging operation is cancelled, and it is determined that the dragging operation is finished, then, the detected position where the movement of the touch point is terminated may be determined.

In step 204, the position to which the first mirroring window is to be moved is determined according to the position where the movement is terminated.

As an implementation, the position where the movement of the touch point is terminated is used as the position to which the first mirroring window is to be moved.

In step 205, in response to the position to be moved to being located in the initial mirroring area, it is determined that the target mirroring area corresponding to the first mirroring window is the initial mirroring area, and it is determined that the display form in the initial mirroring area is the original display form of the first mirroring window in the initial mirroring area.

In some embodiments, the original display form of the first mirroring window in the initial mirroring area refers to that, the display form of the first mirroring window in the initial mirroring area before it is detected that a dragging operation is performed on the touch point set in the first mirroring window, is one of split screen display, full-screen display and small window display.

In step 206, a rebound animation corresponding to the first mirroring window is displayed, and the first mirroring window hidden in the initial mirroring area is displayed according to the original display form.

In the embodiments of the present invention, in response to the position to be moved to being located in the initial mirroring area, which means that the first mirroring window has not moved out of the initial mirroring area, in order to improve the visual effect, the original display form of the first mirroring window in the initial mirroring area is maintained unchanged. The rebound animation corresponding to the first mirroring window is displayed, the hidden first mirroring window is displayed in the initial mirroring area, and the first mirroring window is continually displayed in accordance with the original display form. In some embodiments, if the original display form of the first mirroring window in the initial mirroring area is full screen display, the first mirroring window is continually displayed in full screen. If the original display form of the first mirroring window in the initial mirroring area is split screen display, the first mirroring window is continually displayed in split screen, where the split screen display is, for example, 2 split screen display, 4 split screen display, etc., which is not limited in the embodiments. If the original display form of the first mirroring window in the initial mirroring area is small screen display, the first mirroring window is continually displayed in small screen. As shown in C1 in FIG. 3, the first mirroring window is continually displayed in the initial mirroring area in accordance with the display form of the small screen.

In step 207, in response to the position to be moved to being not located in the initial mirroring area, position information of an indication area corresponding to at least one candidate mirroring area is obtained.

In some embodiments, the candidate mirroring area is at least one mirroring area preset in the screen projection receiving device. The candidate mirroring area has an indication area, and the indication area is used to determine whether the position to be moved to is located in the candidate mirroring area corresponding to the indication area. The position to be moved to is compared with the position of the indication area corresponding to each candidate mirroring area. If the position to be moved to is located in the indication area, screen projection display may be performed again in the candidate mirroring area, and the display form corresponding to the candidate mirroring area may be used for display during display.

In step 208, according to the position to be moved to and the position information of the indication area of each candidate mirroring area, a target mirroring area is determined from the at least one candidate mirroring area, and the display form in the target mirroring area is determined.

In the embodiments of the present invention, in response to the position to be moved to being not located in the initial mirroring area, the position to be moved to is compared with the position of the indication area of each candidate mirroring area; and, in response to the position to be moved to being located in the indication area of any candidate mirroring area, the any candidate mirroring area is taken as the target mirroring area, and the corresponding display form may be determined according to the target mirroring area. In some embodiments, for different target mirroring areas, the corresponding display forms are different. As an example, the candidate mirroring areas include 3 candidate mirroring areas, which are a full screen mirroring area, a left 2 split screen mirroring area and a small window mirroring area, respectively. In some embodiments, the full screen mirroring area refers to the area outside the initial mirroring area in the display screen of the screen projection receiving device. The left 2 split screen mirroring area is the half display area in the display screen starting from the left side. The small window mirroring area is usually an area of a set size located at a set distance to the left of the initial mirroring area.

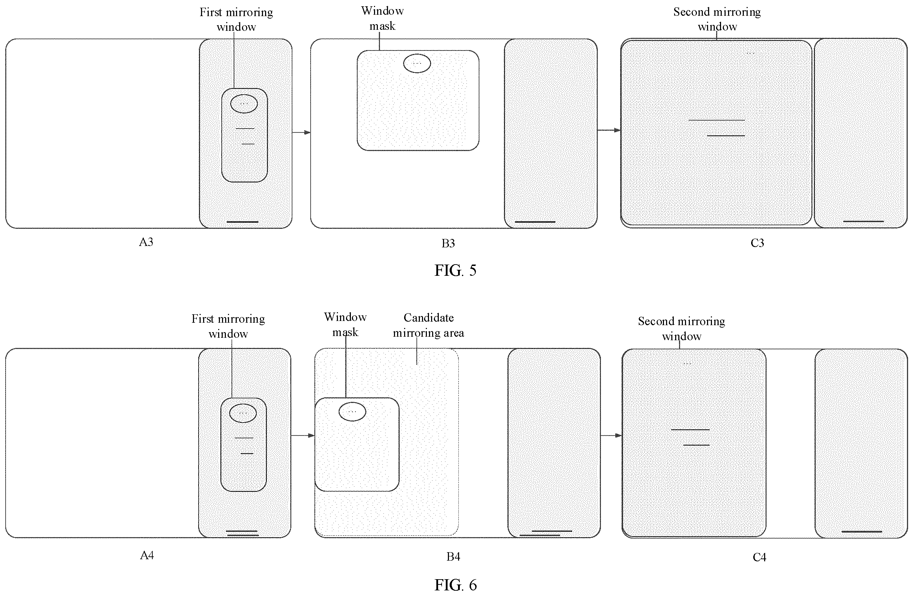

As an example, FIG. 5 is a third schematic diagram of screen projection by dragging provided according to some embodiments of the present invention. As shown in FIG. 5, the window mask of the first mirroring window is moved to the position in B3, that is, the position to which the first mirroring window is to be moved is not located in the initial mirroring area. According to the relationship between the position to be moved to and the position of the indication area of each candidate mirroring area, it is determined that the target mirroring area corresponding to the position to be moved to is the entire display area outside the initial mirroring area, and the display form is full screen display.

As another example, FIG. 6 is a fourth schematic diagram of screen projection by dragging provided according to some embodiments of the present invention. As shown in FIG. 6, the window mask of the first mirroring window is moved to the position in B4, that is, the position to which the first mirroring window is to be moved is not located in the initial mirroring area. According to the relationship between the position to be moved to and the position of the indication area of each candidate mirroring area, it is determined that the target mirroring area corresponding to the position to be moved to is the left half area of the display screen, and the display form is 2 split screen display. It should be noted that, as shown in FIG. 6, during the movement process of the touch point, when the touch point is moved to the indication area of a corresponding candidate mirroring area, the image of the candidate mirroring area may be displayed, or the type of the candidate mirroring area may be indicated by using text on the window mask or in the indication area of the candidate mirroring area, to prompt the user of the target mirroring area to be determined.

In step 209, according to the display form, size information of the second mirroring window to be displayed corresponding to the first mirroring window is determined.

In the embodiments of the present invention, the display form indicates the size information of the second mirroring window after screen projection display is performed again on the first mirroring window in the screen projection receiving device.

In step 210, the size information of the second mirroring window is transmitted to the screen projection device.

In step 211, a data stream of the second mirroring window obtained by the screen projection device performing size adjustment on the first mirroring window based on the size information is obtained.

In the embodiments of the present invention, the screen projection receiving device transmits the size information of the second mirroring window to the screen projection device, so that the screen projection device performs size adjustment on the first mirroring window according to the size information, that is, the display scale is to re-adjusted to obtain the second mirroring window. The length and the width of the second mirroring window are the length and the width in the size information. After the second mirroring window is rendered on the virtual screen, the corresponding data stream is transmitted to the screen projection receiving device.

In step 212, the second mirroring window is displayed in the target mirroring area according to the data stream of the second mirroring window.

In the embodiments of present invention, according to the received data stream of the second mirroring window transmitted by the screen projection device, the screen projection receiving device displays the second mirroring window in the determined target mirroring area of the screen projection receiving device, so that it is realized that screen projection display is performed again on the screen-projected mirroring window on the screen projection receiving device, thus improving the operational convenience in the projection scene.

In a scene, as shown in C2 in FIG. 4, the second mirroring window is displayed in the manner of small window in the small window mirroring area of the screen projection receiving device.

In the second scene, as shown in C3 in FIG. 5, the second mirroring window is displayed in the manner of full screen in the full screen mirroring area in the screen projection receiving device.

In the third scene, as shown in C4 in FIG. 6, the second mirroring window is displayed in the manner of 2 split screen, specifically, left 2 split screen, in the left 2 split screen mirroring area of the screen projection receiving device.

In the method for screen projection of the embodiments of the present invention, the position to which the first mirroring window displayed in the initial mirroring area of the screen projection receiving device is to be moved is determined, the target mirroring area corresponding to the first mirroring window and the display form in the target mirroring area are determined according to the position to be moved to, and the second mirroring window corresponding to the first mirroring window is displayed in the target mirroring area according to the display form. By determining, on the screen projection receiving device, the position to which the screen-projected first mirroring window is to be moved, determining the target mirroring area and the display form for performing separate screen projection on the first mirroring window based on the position to be moved to, and displaying the second mirroring window corresponding to the first mirroring window in the target mirroring area according to the display form, it is realized that screen projection display is performed again on the screen-projected mirroring window on the screen projection receiving device, thus improving the operational convenience in the screen projection scene.

Based on the above embodiments, in some embodiments of the present invention, before determining the position to which the first mirroring window displayed in the initial mirroring area of the screen projection receiving device is to be moved, following steps may further be include.

Screen projection information of at least one application transmitted by the screen projection device is received, where each piece of the screen projection information includes the application information and the icon data of the corresponding application. The icon data includes the metadata (such as the size, the color depth of the icon, etc.) and the image file format of the icon, which is used to render and display the icon on the display screen of the screen projection receiving device. The application information includes the name, the identifier, and the version of the application, etc., which is used to correctly identify and display the application on the screen projection receiving device.

Based on the screen projection information of at least one application, the icon of at least one application is displayed in the set area of the screen projection receiving device, where the set area is an area preset by the system, such as the dock bar on the display screen of the screen projection receiving device. The dock bar may be displayed at the bottom, top, or side of the display screen according to the system settings. By displaying the icon of at least one application in the screen projection receiving device, it is convenient for the user to perform screen projection display on various applications on the screen projection receiving device based on their needs, thus improving the convenience of the screen projection operation.

Furthermore, in response to detecting that a target operation is performed on an icon of a target application in at least one application, a screen projection control instruction of the target application is transmitted to the screen projection device, where the screen projection control instruction is used for the screen projection device to generate a data stream of the first mirroring window corresponding to the screen projection window of the target application according to the screen projection control instruction. In some embodiments, the target operation may be a click operation and a sliding operation performed by a user on an icon of an application displayed in the set area on the screen projection receiving device, etc. In some embodiments, the click operation includes a short press operation or a long press operation. By executing the target operation, the target application to be screen-projected and displayed is selected from at least one application, then a screen projection control instruction of the target application is generated, and the screen projection control instruction of the target application is transmitted to the screen projection device. Therefore, when the screen projection device receives the screen projection control instruction of the target application, full screen display or split screen display or small window display is performed on the screen projection device according to the display form included in the screen projection control instruction of the target application; the target application interface, that is, the screen projection window, is displayed according to the display form, the data stream of the first mirroring window corresponding to the screen projection interface is generated by using the virtual screen technology; and, the data stream of the first mirroring window is transmitted to the screen projection receiving device.

Then, according to the received data stream of the first mirroring window transmitted by the screen projection device, the first mirroring window is displayed in the initial mirroring area. In some embodiments, the display form of the first mirroring window is the same as the display form of the corresponding screen projection window in the screen projection device, and the display form of the first mirroring window in the initial mirroring area of the screen projection receiving device is the original display form.

It should be noted that the target application is the application selected by the user for displaying the first mirroring window in the screen projection receiving device, and "target" is the identification information of the application.

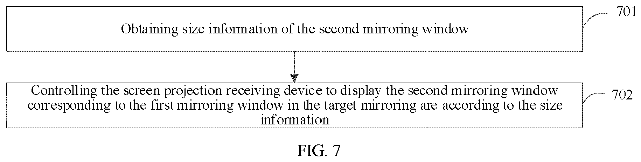

Based on the above embodiments, according to the embodiments of the present invention, there is provided another method for screen projection. FIG. 7 is a third flow chart of another method for screen projection provided according to some embodiments of the present invention. As shown in FIG. 7, the method includes the following steps.

In step 701, size information of the second mirroring window is obtained.

In step 702, according to the size information, the screen projection receiving device is controlled to display the second mirroring window corresponding to the first mirroring window in the target mirroring area.

In some embodiments, the size information is the size information of the second mirroring window to be displayed corresponding to the first mirroring window determined according to the display form. The target mirroring area and the display form in the target mirroring area are determined according to the determined position to which the first mirroring window displayed in the display screen of the screen projection receiving device is to be moved. In some embodiments, in the screen projection receiving device, the method for determining the position to which the first mirroring window is to be moved may refer to the relevant explanations in the aforementioned embodiments. The principles are relevant to each other, and will not be repeated here.

In some embodiments of the present invention, size information of the second mirroring window to be displayed corresponding to the first mirroring window determined by the screen projection receiving device based on the display form is received, size adjustment is performed on the first mirroring window based on the size information to obtain the second mirroring window, and the content of the first mirroring window is re-rendered on the virtual screen. Then, the second mirroring window in the virtual screen obtained by re-rendering is copied to obtain a data stream of the second mirroring window, and the data stream of the second mirroring window is transmitted to the screen projection receiving device, so that the screen projection receiving device performs screen projection display on the second mirroring window in the target mirroring area.

In the method for screen projection of the embodiments of the present invention, the screen projection device controls the screen projection receiving device to display the second mirroring window corresponding to the first mirroring window in the target mirroring area according to the display form. By determining, on the screen projection receiving device, the position to which the screen-projected first mirroring window to be moved, determining the target mirroring area and the display form for performing separate screen projection on the first mirroring window based on the position to be moved to, and displaying the second mirroring window corresponding to the first mirroring window in the target mirroring area according to the display form, it is realized that screen projection display is performed again on the screen-projected mirroring window on the screen projection receiving device, thus improving the operational convenience in the screen projection scene.

Based on the above embodiments, in response to receiving the screen projection instruction of each application, for example, in response to the icon of the application being screen-projected by mirroring to the set area of the screen projection receiving device for display, the screen projection device transmits the screen projection information of at least one application to the screen projection receiving device, so that the screen projection receiving device displays the icon of at least one application in the set area of the screen projection receiving device based on the screen projection information of at least one application. In response to detecting that a target operation is performed on the icon of the target application in at least one application, the screen projection control instruction of the target application is transmitted to the screen projection device, so that the screen projection device generates the data stream of the first mirroring window corresponding to the screen projection window of the target application according to the screen projection control instruction. The data stream of the first mirroring window corresponding to the screen projection window of the target application is transmitted to the screen projection receiving device, so that the screen projection receiving device displays the first mirroring window of the target application in the initial mirroring area, where the relevant explanations in the above embodiments are also applicable to the present embodiment. The principles are the same, which will not be repeated here.

Furthermore, in the process of determining the position to which the first mirroring window is to be moved by the screen projection receiving device, the screen projection receiving device needs to interact with the screen projection device, to obtain a window screenshot corresponding to the first mirroring window. For details, reference may be made to the relevant explanations in the aforementioned embodiments. Thus, in the process of determining the position to which the first mirroring window is to be moved through a dragging operation, the screen projection receiving device may synchronously display the window indication icon of the first mirroring window based on the window screenshot, to improve the authenticity and the smoothness of the dragging operation performed on the first mirroring window. Specifically, a target touch screen event of the first mirroring window transmitted by the screen projection receiving device is received, where the target touch screen event is generated when the screen projection receiving device detects that a dragging operation is performed on a touch point set in the first mirroring window. Furthermore, according to the target touch screen event, a screenshot of the screen projection window corresponding to the first mirroring window displayed in the screen projection device is taken, to obtain the window screenshot of the first mirroring window. The window screenshot of the first mirroring window is transmitted to the screen projection receiving device.

In some embodiments, the relevant explanations and beneficial effects in the aforementioned embodiments are also applicable to the present embodiment. The principles are the same, which are not repeated here.

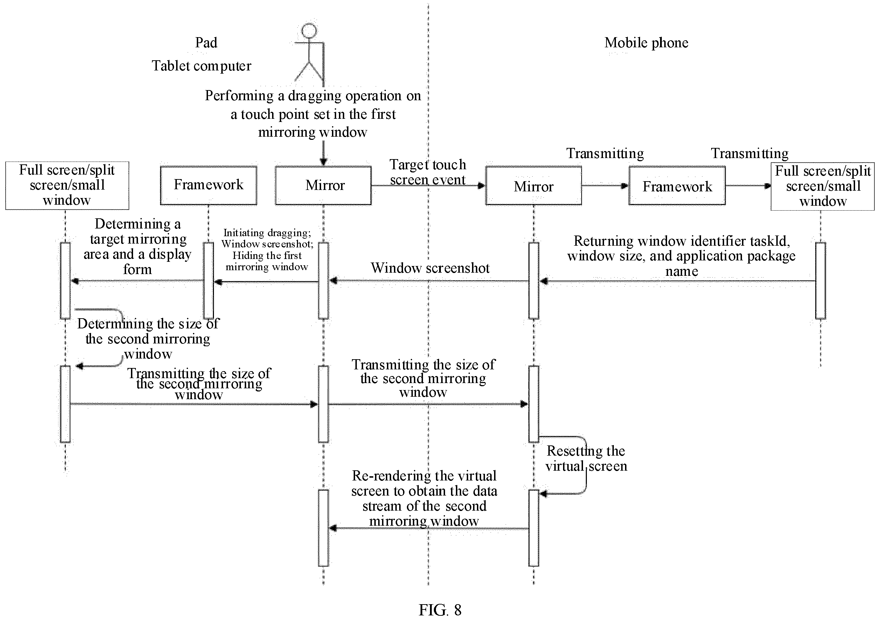

Based on the above embodiment, FIG. 8 is a flow chart of a method for screen projection interaction provided according to some embodiments of the present invention. It is described by taking the screen projection receiving device being a tablet computer and the screen projection device being a mobile phone as an example. As shown in FIG. 8, the interaction method includes following.

In response to the screen projection instruction, the window of the application displayed in the mobile phone, which may be called the screen projection window, is screen-projected by the mobile phone to the initial mirroring area of the tablet computer for display. In response to detecting that a user starts to drag a touch point set in the first mirroring window displayed in full screen, split screen or small window in the initial mirroring area, a target touch screen event (i.e., a touch event) is generated by the tablet computer. The target touch screen event is transmitted from the Mirror in the tablet computer to the Mirror in the mobile phone, where Mirror is a system screen projection function by which the window of the application displayed on the mobile phone may be screen-projected to the tablet. In some embodiments, the set touch point is, for example, a control of the application, i.e., a window controller.

After the mobile phone receives the target touch screen event, the middle layer Framework of the operating system in the mobile phone determines that the target touch screen event is a target touch screen event for the first mirroring window transmitted by the tablet computer, and that the position is the position of the window controller in the application. As an implementation, after receiving the target touch screen event, the mobile phone may determine based on the identification information carried in the target touch screen event that the target touch screen event is a target touch screen event for the first mirroring window transmitted by the tablet computer, convert the position information of the touch point in the tablet computer carried in the target touch screen event into the position in the display screen of the mobile phone, compare the position in the display screen of the mobile phone with the position of the window controller in the window of the application set in the mobile phone, and determine that the touch position is the position of the window controller in the application.

Furthermore, the Framework of the mobile phone blocks the dragging on the window of the application in screen projection displayed on the mobile phone, and transmits the window identifier taskId, the window size, and the application package name of the application currently in screen projection to the Mirror of the tablet computer. At the same time, the Mirror on the mobile phone side takes a window screenshot of the screen projection window corresponding to the first mirroring window displayed on the display screen of the mobile phone, and transmits the window screenshot to the tablet computer, so that the tablet computer receives the window screenshot corresponding to the first mirroring window.

Based on the window screenshot, the tablet computer displays the display position of the window indication icon for indicating the first mirroring window in the display screen during the dragging and moving process of the touch point. In some embodiments, when the position of the touch point is located in the initial mirroring area, it is the window screenshot of the first mirroring window that moves following the touch point. When the position of the touch point is not located in the initial mirroring area, it is the window mask obtained based on the window screenshot of the first mirroring window that moves following the touch point, and at the same time, the first mirroring window is hidden in the tablet computer, so that the first mirroring window runs in the background, realizing the conjunction of the dragging display effect and enhancing the display effect.

In response to detecting that the dragging operation is finished, the position where the movement of the touch point is terminated, that is, the position where the user releases the hand to finish the dragging operation, is determined. If the position is within the initial mirroring area, a rebound animation is performed and the previous first mirroring window is displayed again. If the position is outside the initial mirroring area, it is displayed according to the display form, such as full screen, split screen or small window. Specifically, size information of the second mirroring window to be displayed corresponding to the first mirroring window is determined, the size information of the second mirroring window is transmitted to the screen projection device, and a data stream of the second mirroring window obtained by the screen projection device performing size adjustment on the first mirroring window based on the size information is obtained, and the second mirroring window is displayed in the target mirroring area according to the data stream of the second mirroring window.

In some embodiments, the relevant explanations and beneficial effects in the aforementioned embodiments are also applicable to the present embodiment, which are not be repeated here.

In order to implement the above-mentioned embodiment, according to some embodiments of the present invention, there is further proposed an apparatus for screen projection.

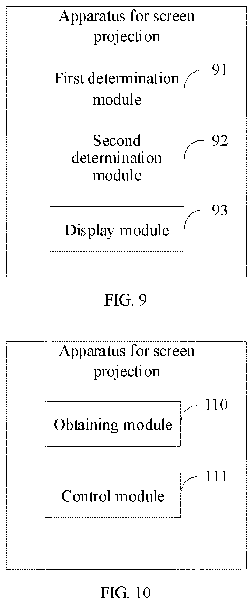

FIG. 9 is a first structural diagram of an apparatus for screen projection provided according to some embodiments of the present invention.

As shown in FIG. 9, the apparatus may include a first determination module 91, a second determination module 92, and a display module 93.

The first determination module 91 is configured to determine a position to which a first mirroring window displayed in an initial mirroring area of a screen projection receiving device is to be moved.

The second determination module 92 is configured to determine a target mirroring area corresponding to the first mirroring window and a display form in the target mirroring area according to the position to be moved to.

The display module 93 is configured to display a second mirroring window corresponding to the first mirroring window in the target mirroring area according to the display form.

Furthermore, in some embodiments of the present invention, the first determination module 91 is further configured to:
in response to detecting that a dragging operation is performed on a touch point set in the first mirroring window, obtain a window screenshot of the first mirroring window;
according to the window screenshot of the first mirroring window and a position to which the touch point moves in a display screen of the screen projection receiving device, adjust a display position of a window indication icon for indicating the first mirroring window in the display screen;
in response to detecting that the dragging operation is finished, determine a position where movement of the touch point is terminated; and
determine the position to which the first mirroring window is to be moved according to the position where the movement is terminated.

In some embodiments of the present invention, the first determination module 91 is further configured to:
generate a target touch screen event for the first mirroring window;
transmit the target touch screen event to a screen projection device, where the target touch screen event is used for the screen projection device to obtain the window screenshot of the first mirroring window according to the target touch screen event; and
obtain the window screenshot of the first mirroring window transmitted by the screen projection device.

In some embodiments of the present invention, the first determination module 91 is further configured to:
compare the position with a position of the initial mirroring area; in response to the position being located in the initial mirroring area, take the window screenshot as the window indication icon of the first mirroring window; and
adjust the display position of the window screenshot in the display screen.

In some embodiments of the present invention, the first determination module 91 is further configured to:
compare the position with a position of the initial mirroring area;
in response to the position being not located in the initial mirroring area, generate a window mask of the window screenshot;
take the window mask as the window indication icon for indicating the first mirroring window; and
adjust the display position of the window indication icon in the display screen.

In some embodiments of the present invention, the apparatus further includes:
a hiding module, configured to hide the first mirroring window in the initial mirroring area.

In some embodiments of the present invention, the second determination module 92 is further configured to:
in response to the position to be moved to being located in the initial mirroring area, determine that the target mirroring area corresponding to the first mirroring window is the initial mirroring area, and determine that the display form in the initial mirroring area is an original display form of the first mirroring window in the initial mirroring area.

In some embodiments of the present invention, the display module 93 is further used to:
display a rebound animation corresponding to the first mirroring window;
display the first mirroring window hidden in the initial mirroring area according to the original display form.

In some embodiments of the present invention, the second determination module 92 is further configured to:
in response to the position to be moved to being not located in the initial mirroring area, obtain position information of an indication area corresponding to at least one candidate mirroring area; and
according to the position to be moved to and position information of an indication area of each candidate mirroring area, determine the target mirroring area from at least one candidate mirroring area, and determine the display form in the target mirroring area.

In some embodiments of the present invention, the display module 93 is further used to:
determine, according to the display form, size information of the second mirroring window to be displayed corresponding to the first mirroring window;
transmit the size information of the second mirroring window to a screen projection device;
obtain a data stream of the second mirroring window obtained by the screen projection device performing size adjustment on the first mirroring window based on the size information; and
display the second mirroring window in the target mirroring area according to the data stream of the second mirroring window.

In some embodiments of the present invention, the apparatus further includes: a screen projection module, configured to:
receive screen projection information of at least one application transmitted by a screen projection device;
based on the screen projection information of the at least one application, display an icon of the at least one application in a set area of the screen projection receiving device;
in response to detecting that a target operation is performed on an icon of a target application in the at least one application, transmit a screen projection control instruction of the target application to the screen projection device, where the screen projection control instruction is used for the screen projection device to generate a data stream of the first mirroring window corresponding to a screen projection window of the target application according to the screen projection control instruction; and
display the first mirroring window in the initial mirroring area according to the received data stream of the first mirroring window transmitted by the screen projection device.

It should be noted that the above explanation of the method embodiment is also applicable to the apparatus in this embodiment, which will not be repeated here.

According to the apparatus for screen projection in the embodiments of the present invention, the position to which the first mirroring window displayed in the initial mirroring area of the screen projection receiving device is to be moved is determined, the target mirroring area corresponding to the first mirroring window and the display form in the target mirroring area are determined according to the position to be moved to, and the second mirroring window corresponding to the first mirroring window is displayed in the target mirroring area according to the display form. By determining, on the screen projection receiving device, the position to which the screen-projected first mirroring window is to be moved, determining the target mirroring area and the display form for performing separate screen projection on the first mirroring window based on the position to be moved to, and displaying the second mirroring window corresponding to the first mirroring window in the target mirroring area according to the display form, it is realized that screen projection display is performed again on the screen-projected first mirroring window on the screen projection receiving device, thus improving the operational convenience in the screen projection scene.

In order to implement the above-mentioned embodiments, according to some embodiments of the present invention, there is further proposed an apparatus for screen projection.

FIG. 10 is a second structural schematic diagram of an apparatus for screen projection provided according to some embodiments of the present invention.

As shown in FIG. 10, the apparatus may include an obtaining module 110, and a control module 111.

The obtaining module 110 is configured to obtain size information of a second mirroring window, where the size information is size information of the second mirroring window to be displayed corresponding to a first mirroring window determined according to a display form.

The control module 111 is configured to, according to the size information, control a screen projection receiving device to display the second mirroring window corresponding to the first mirroring window in a target mirroring area, where the target mirroring area and the display form in the target mirroring area are determined according to a position to which the first mirroring window displayed in an initial mirroring area of the screen projection receiving device is to be moved.

Furthermore, in some embodiments of the present invention, the control module 110 is further configured to:
obtain a data stream of the second mirroring window by performing size adjustment on the first mirroring window based on the size information; and
transmit the data stream of the second mirroring window to the screen projection receiving device, where the data stream of the second mirroring window is used for the screen projection receiving device to display the second mirroring window in the target mirroring area according to the data stream of the second mirroring window.

In some embodiments of the present invention, the apparatus further includes a screenshot module.

The screenshot module is configured to: receive a target touch screen event of the first mirroring window transmitted by the screen projection receiving device; according to the target touch screen event, obtain a window screenshot of the first mirroring window by taking a screenshot of a screen projection window displayed in the screen projection device and corresponding to the first mirroring window; and, transmit the window screenshot of the first mirroring window to the screen projection receiving device.

It should be noted that the above explanations of the method embodiments are also applicable to the apparatus in this embodiment, which will not be repeated here.

According to the apparatus for screen projection in the embodiments of the present invention, by determining, on the screen projection receiving device, the position to which the screen-projected first mirroring window is to be moved, determining the target mirroring area and the display form for performing separate screen projection on the first mirroring window based on the position to be moved to, and displaying the second mirroring window corresponding to the first mirroring window in the target mirroring area according to the display form, it is realized that screen projection display is performed again on the screen-projected first mirroring window on the screen projection receiving device, thus improving the operational convenience in the screen projection scene.

In order to implement the above embodiments, the present invention further proposes an electronic device, including a memory, a processor, and a computer program stored in the memory and executable on the processor. When the processor executes the program, the method described in the above method embodiments is implemented.

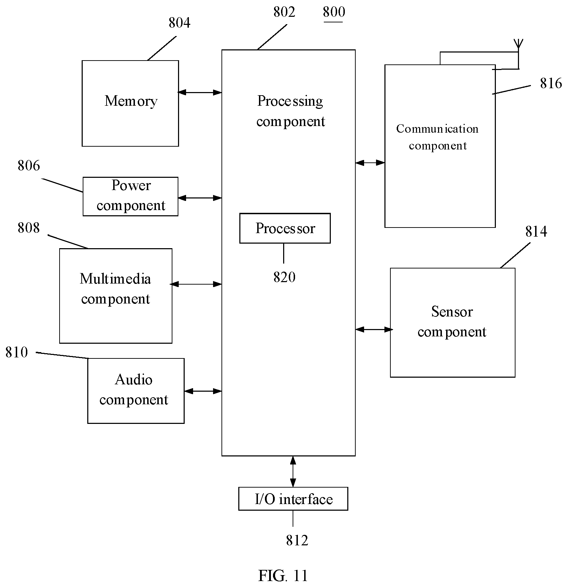

FIG. 11 is a schematic structural diagram of an electronic device provided according to some embodiments of the present invention. For example, the electronic device 800 may be a mobile phone, a computer, a digital broadcast terminal, a message transceiver device, a game console, a tablet device, a medical device, a fitness device, a personal digital assistant, etc.

Referring to FIG. 11, the electronic device 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the electronic device 800, such as operations associated with display, phone calls, data communications, camera operations, and recording operations. The processing component 802 may include one or more processors 820 to execute instructions to complete all or part of the steps of the above-mentioned method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the electronic device 800. Examples of such data include instructions for any application or method operating on the electronic device 800, contact data, phone book data, messages, pictures, videos, etc. The memory 804 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 806 provides power to various components of the electronic device 800. The power component 806 may include a power management system, one or more power supplies, and other components associated with generating, managing, and distributing power for the electronic device 800.

The multimedia component 808 includes a screen that provides an output interface between the electronic device 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the electronic device 800 is in an operation mode, such as a shooting mode or a video mode, the front camera and/or the rear camera may receive external multimedia data. Each of the front camera and the rear camera may be a fixed optical lens system or has a focal length and optical zoom capability.

The audio component 810 is configured to output and/or input audio signals. For example, the audio component 810 includes a microphone (MIC) configured to receive an external audio signal when the electronic device 800 is in an operation mode, such as a call mode, a recording mode, and a speech recognition mod. The received audio signal may be further stored in the memory 804 or transmitted via the communication component 816. In some embodiments, the audio component 810 also includes a speaker for outputting audio signals.

The I/O interface 812 provides an interface between the processing component 802 and the peripheral interface module, which may be a keyboard, a click wheel, a button, etc. The button may include but is not limited to: a home button, a volume button, a start button, and a lock button.

The sensor component 814 includes one or more sensors for providing various aspects of status assessment for the electronic device 800. For example, the sensor component 814 may detect the open/closed state of the electronic device 800, the relative positioning of the components, such as the display and keypad of the electronic device 800. The sensor component 814 may also detect the position change of the electronic device 800 or a component of the electronic device 800, the presence or absence of user contact with the electronic device 800, the orientation or acceleration/deceleration of the electronic device 800, and the temperature change of the electronic device 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the electronic device 800 and other devices. The electronic device 800 may access a wireless network based on a communication standard, such as WiFi, 4G or 5G, or a combination of them. In an example embodiment, the communication component 816 receives a broadcast signal or broadcast-related information from an external broadcast management system via a broadcast channel. In an example embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the electronic device 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, there is further provided a non-transitory computer-readable storage medium including an instruction, such as a memory 804 including an instruction. The instruction may be executed by a processor 820 of the electronic device 800 to complete the above method. For example, the non-transitory computer-readable storage medium may be a ROM, a random access memory (RAM), a CD-ROM, a magnetic tape, a floppy disk, an optical data storage device, etc.

In order to implement the above embodiments, the present invention further proposes a non-transitory computer-readable storage medium on which a computer program is stored. When the program is executed by a processor, the method described in the above method embodiments is implemented.

In order to implement the above embodiments, the present invention further proposes a computer program product on which a computer program is stored. When the computer program is executed by a processor, the method described in the above method embodiments is implemented.

In the description of this specification, the description with reference to the terms "an embodiment", "some embodiments", "example", "specific example", or "some examples" etc. means that the specific features, structures, materials or characteristics described in conjunction with the embodiment or example are included in at least one embodiment or example of the present invention. In this specification, the schematic representations of the above terms do not necessarily refer to the same embodiment or example. Moreover, the specific features, structures, materials or characteristics described may be combined in any one or more embodiments or examples in a suitable manner. In addition, those skilled in the art may combine and integrate the different embodiments or examples and the features of the different embodiments or examples described in this specification, without contradiction.

In addition, the terms "first" and "second" are used for descriptive purposes only and should not be understood as indicating or implying relative importance or implicitly indicating the number of the indicated technical features. Therefore, the features defined as "first" and "second" may explicitly or implicitly include at least one of the features. In the description of this application, the meaning of "plurality" is at least two, such as two, three, etc., unless otherwise clearly and specifically defined.

Any process or method description in the flow chart or otherwise described here may be understood to represent a module, fragment or portion of code including one or more executable instructions for implementing the steps of a custom logical function or process, and the scope of the preferred embodiments of the present invention includes alternative implementations in which functions may be performed, not in the order shown or discussed, but in a substantially simultaneous manner or in reverse order according to the functions involved, which should be understood by those skilled in the technical field to which the embodiments of the present invention belong.

The logic and/or steps represented in the flow chart or otherwise described here, for example, may be considered as an ordered list of executable instructions for implementing logical functions, and may be embodied in any computer-readable medium for use by an instruction execution system, device or apparatus (such as a computer-based system, a system including a processor, or other systems that may read the instruction from an instruction execution system, device or apparatus and execute the instruction), or in combination with these instruction execution systems, devices or apparatuses. In this specification, "computer-readable medium" may be any apparatus that may include, store, communicate, propagate or transmit a program for use by an instruction execution system, device or apparatus, or may be used in combination with these instruction execution systems, devices or apparatuses. More specific examples (non-exhaustive list) of the computer-readable medium include the following: an electrical connection part with one or more wires (electronic device), a portable computer disk box (magnetic apparatus), a random access memory (RAM), a read-only memory (ROM), an erasable and programmable read-only memory (EPROM or flash memory), an optical fiber apparatus, and a portable compact disk read-only memory (CDROM). In addition, the computer-readable medium may even be paper or other suitable medium on which the program may be printed. This is because, the program may be obtained electronically, for example, by optically scanning the paper or other medium and then editing, interpreting or processing in other suitable ways if necessary, and then stored in a computer memory.

It should be understood that the various parts of the present invention may be implemented by hardware, software, firmware or a combination of them. In the above-mentioned embodiments, multiple steps or methods may be implemented by software or firmware stored in a memory and executed by a suitable instruction execution system. For example, if implemented by hardware, as in another embodiment, it may be implemented by any one of the following technologies known in the art or their combination: a discrete logic circuit having a logic gate circuit for implementing a logic function for a data signal, a dedicated integrated circuit having a suitable combination of logic gate circuits, a programmable gate array (PGA), a field programmable gate array (FPGA), etc.

Those of ordinary skills in the art may understand that all or part of the steps in the method for implementing the above-mentioned embodiments may be completed by instructing related hardware through a program, and the program may be stored in a computer-readable storage medium. When executed, the program includes one or a combination of the steps of the method embodiments.

In addition, each functional unit in each embodiment of the present invention may be integrated into a processing module, or each unit may exist physically separately, or two or more units may be integrated into one module. The above-mentioned integrated module may be implemented in the form of hardware or in the form of a software functional module. If the integrated module is implemented in the form of a software functional module and sold or used as an independent product, it may also be stored in a computer-readable storage medium.

The storage medium mentioned above may be a read-only memory, a disk or an optical disk, etc. Although the embodiments of the present invention have been shown and described above, it may be understood that the above embodiments are exemplary and cannot be understood as limitations of the present invention. Those of ordinary skills in the art may make changes, modifications, substitutions, and variations on the above embodiments within the scope of the present invention.

## Claims

1. A method for screen projection, comprising:
determining (101) a position to which a first mirroring window displayed in an initial mirroring area of a screen projection receiving device is to be moved;
determining (102) a target mirroring area corresponding to the first mirroring window and a display form in the target mirroring area according to the position to be moved to; and
displaying (103) a second mirroring window corresponding to the first mirroring window in the target mirroring area according to the display form.

2. The method according to claim 1, wherein determining (101) the position to which the first mirroring window displayed in the initial mirroring area of the screen projection receiving device is to be moved comprises:
in response to detecting that a dragging operation is performed on a touch point set in the first mirroring window, obtaining (201) a window screenshot of the first mirroring window;
adjusting (202) a display position of a window indication icon for indicating the first mirroring window in the display screen according to the window screenshot of the first mirroring window and a position to which the touch point moves in a display screen of the screen projection receiving device;
in response to detecting that the dragging operation is finished, determining (203) a position where movement of the touch point is terminated; and
determining (204) the position to which the first mirroring window is to be moved according to the position where the movement is terminated.

3. The method according to claim 2, wherein obtaining (201) the window screenshot of the first mirroring window comprises:
generating a target touch screen event for the first mirroring window;
transmitting the target touch screen event to a screen projection device, wherein the target touch screen event is used for the screen projection device to obtain the window screenshot of the first mirroring window according to the target touch screen event; and
obtaining the window screenshot of the first mirroring window transmitted by the screen projection device.

4. The method according to claim 2 or 3, wherein adjusting (202) the display position of the window indication icon for indicating the first mirroring window in the display screen according to the window screenshot of the first mirroring window and the position to which the touch point moves in the display screen of the screen projection receiving device, comprises:
comparing the position with a position of the initial mirroring area;
in response to the position being located in the initial mirroring area, taking the window screenshot as the window indication icon of the first mirroring window; and
adjusting the display position of the window screenshot in the display screen;
or,
comparing the position with a position of the initial mirroring area;
in response to the position being not located in the initial mirroring area, generating a window mask of the window screenshot;
taking the window mask as the window indication icon for indicating the first mirroring window; and
adjusting the display position of the window indication icon in the display screen.

5. The method according to any one of claims 2 to 4, further comprising:
hiding the first mirroring window in the initial mirroring area.

6. The method according to any one of the preceding claims, wherein determining (102) the target mirroring area corresponding to the first mirroring window and the display form in the target mirroring area according to the position to be moved to, comprises:
in response to the position to be moved to being located in the initial mirroring area, determining (205) that the target mirroring area corresponding to the first mirroring window is the initial mirroring area, and determining that the display form in the initial mirroring area is an original display form of the first mirroring window in the initial mirroring area.

7. The method according to claim 6, wherein displaying (103) the second mirroring window corresponding to the first mirroring window in the target mirroring area according to the display form comprises:
displaying (206) a rebound animation corresponding to the first mirroring window; and
displaying the first mirroring window hidden in the initial mirroring area according to the original display form.

8. The method according to any one of the preceding claims, wherein determining (102) the target mirroring area corresponding to the first mirroring window and the display form in the target mirroring area according to the position to be moved to, comprises:
in response to the position to be moved to being not located in the initial mirroring area, obtaining (207) position information of an indication area corresponding to at least one candidate mirroring area; and
according to the position to be moved to and position information of an indication area of each candidate mirroring area, determining (208) the target mirroring area from the at least one candidate mirroring area, and determining the display form in the target mirroring area.

9. The method according to claim 8, wherein displaying (103) the second mirroring window corresponding to the first mirroring window in the target mirroring area according to the display form comprises:
determining (209) size information of the second mirroring window according to the display form;
transmitting (210) the size information of the second mirroring window to a screen projection device;
obtaining (211) a data stream of the second mirroring window obtained by the screen projection device performing size adjustment on the first mirroring window based on the size information; and
displaying (212) the second mirroring window in the target mirroring area according to the data stream of the second mirroring window.

10. The method according to any one of claims 1 to 9, further comprising:
receiving screen projection information of at least one application transmitted by a screen projection device;
displaying an icon of the at least one application in a set area of the screen projection receiving device based on the screen projection information of the at least one application;
in response to detecting that a target operation is performed on an icon of a target application in the at least one application, transmitting a screen projection control instruction of the target application to the screen projection device, wherein the screen projection control instruction is used for the screen projection device to generate a data stream of the first mirroring window corresponding to a screen projection window of the target application according to the screen projection control instruction; and
displaying the first mirroring window in the initial mirroring area according to the received data stream of the first mirroring window transmitted by the screen projection device.

11. A method for screen projection, comprising:
obtaining (701) size information of a second mirroring window to be displayed corresponding to a first mirroring window, wherein the size information is determined according to a display form; and
controlling (702) a screen projection receiving device to display the second mirroring window corresponding to the first mirroring window in a target mirroring area according to the size information, wherein the target mirroring area and the display form in the target mirroring area are determined according to a determined position to which the first mirroring window displayed in an initial mirroring area of the screen projection receiving device is to be moved.

12. The method according to claim 11, wherein controlling (702) the screen projection receiving device to display the second mirroring window corresponding to the first mirroring window in the target mirroring area according to the size information comprises:
obtaining a data stream of the second mirroring window by performing size adjustment on the first mirroring window based on the size information; and
transmitting the data stream of the second mirroring window to the screen projection receiving device, wherein the data stream of the second mirroring window is used for the screen projection receiving device to display the second mirroring window in the target mirroring area according to the data stream of the second mirroring window.

13. The method according to claim 11 or 12, further comprising:
receiving a target touch screen event for the first mirroring window transmitted by the screen projection receiving device;
obtaining, according to the target touch screen event, a window screenshot of the first mirroring window by taking a screenshot of a screen projection window displayed in a screen projection device and corresponding to the first mirroring window; and
transmitting the window screenshot of the first mirroring window to the screen projection receiving device.

14. An electronic device (800), comprising a memory (804), a processor (820) and a computer program stored in the memory and executable on the processor (820), wherein when the processor (820) executes the computer program, the method according to any one of claims 1 to 10 is implemented, or the method according to any one of claims 11 to 13 is implemented.

15. A non-transitory computer-readable storage medium, wherein a computer program is stored on the non-transitory computer-readable storage medium, when the computer program is executed by a processor (820), the method according to any one of claims 1 to 10 is implemented, or the method according to any one of claims 11 to 13 is implemented.
